# EUROPÄISCHE PATENTSCHRIFT

(11) **EP 3 215 379 B1**
(45) Veröffentlichungstag und Bekanntmachung des Hinweises auf die Patenterteilung: **10.03.2021**
(21) Anmeldenummer: 15787910.7
(22) Anmeldetag: 13.10.2015
(51) Int. Cl.: B60J 7/057, E05F 11/42, F16H 19/06

(54) **ANTRIEBSKABEL UND ANTRIEBSEINHEIT FÜR FAHRZEUGELEMENT**
DRIVE CABLE AND DRIVE UNIT FOR A VEHICLE ELEMENT
CÂBLE DE COMMANDE ET UNITÉ D'ENTRAÎNEMENT POUR ÉLÉMENT DE VÉHICULE

(30) Priorität: 05.11.2014 DE 102014116123
(43) Veröffentlichungstag der Anmeldung: 13.09.2017
(73) Patentinhaber: Webasto SE, 82131 Stockdorf (DE)
(72) Erfinder: HOELZEL, Dominik, 82131 Stockdorf (DE); SCHREIBER, Ulrich, 82131 Stockdorf (DE); DE CALUWE, Kevin, B-8500 Kortrijk (BE); VERMOERE, Christophe, B-8510 Marke (BE)
(74) Vertreter: advotec.
(86) Internationale Anmeldenummer: PCT/EP2015/073688
(87) Internationale Veröffentlichungsnummer: WO 2016/071084

(56) Entgegenhaltungen:
- EP-A2- 1 004 796
- DE-A1- 4 029 011
- DE-B- 1 003 517
- GB-A- 2 207 186

## Beschreibung

Die Erfindung betrifft ein Antriebskabel zur Betätigung eines gegenüber einem Fahrzeugaufbau beweglichen Fahrzeugelements sowie eine Antriebseinheit, umfassend ein Antriebszahnrad und mindestens ein derartiges Antriebskabel.

Antriebskabel zur Betätigung eines gegenüber einem Fahrzeugaufbau beweglichen Fahrzeugelements sind aus der Praxis bekannt und dienen beispielsweise zum Betätigen eines Deckelelements einer Schiebedachanordnung, mittels dessen eine Dachöffnung des betreffenden Fahrzeugs wahlweise verschlossen oder zumindest teilweise freigegeben werden kann. Die Antriebskabel übertragen eine Antriebskraft von einem Antriebsmotor auf das bewegliche Fahrzeugelement und können aus einem flexiblen Kunststoffkörper gebildet sein, der an das Fahrzeugelement angebunden ist und eine Verzahnung aufweist, die mit einem Antriebszahnrad des Antriebsmotors oder eines nachgeschalteten Getriebes in Eingriff steht. Um dem Kunststoffantriebskabel die erforderliche Stabilität zu verleihen, kann der Kabelkörper, an dem die Verzahnung ausgebildet ist, von einer sich in axialer Richtung erstreckenden Armierung durchgriffen sein.

Bei den bekannten Kunststoffantriebskabeln besteht das Problem, dass entweder kein zufriedenstellendes Geräuschverhalten im Betrieb erzielt werden kann, da die Verzahnung an einer Führungsfläche gleitet, was wiederum zu einem Rattern führt, oder die Flexibilität in Kabelquerrichtung nicht den im Bereich eines Schiebedachs gestellten Anforderungen genügt.

Des Weiteren ist es aus der Praxis bekannt, zum Antrieb von Deckelelementen einer Schiebedachanordnung druckfeste Antriebskabel einzusetzen, die als Steigungskabel bezeichnet werden und an ihrem Umfang eine Steigungswendel aufweisen, welche mit einem Antriebszahnrad des betreffenden Antriebsmotors in Eingriff steht. Am Umfang ist zudem eine Beflockung ausgebildet. Bei derartigen Antriebskabeln kann es aber zu einem Kabelüberspringen im Bereich des Antriebsritzels kommen, was wiederum mit einem unerwünschten Geräuschverhalten und einem hohem Verschleiß verbunden ist. Da der Umfang eines Steigungskabels nicht homogen ausgebildet ist und auch mit der Beflockung versehen ist, ist eine Führung in korrespondierenden Führungsrohren ohne gegebenenfalls störende Geräusche nicht möglich.

Aus Druckschrift DE 1 003 517 ist eine Vorrichtung zum Übertragen von Bewegungskräften bekannt, die als Antriebskabel ausgebildet ist. Dieses Antriebskabel umfasst einen biegsamen Stag aus Kunststoff, der als Kabelkörper angesehen werden kann und eine Verzahnung zum Eingriff eines Zahnrades oder dergleichen aufweist. Der Kabelkörper ist von einer Armierung durchgriffen, die in einem Hohlraum des Kabelkörpers angeordnet ist. Die Verzahnung ist durch in axialer Richtung regelmäßig beabstandete, taschenartige Ausnehmungen gebildet, die in Kabellängsrichtung von Flanken von resultierenden Zahnköpfen und in Kabelquerrichtung beidseits jeweils von einer Taschenflanke begrenzt sind. Bodenseitig sind die Ausnehmungen jeweils von einem Zahnfuß begrenzt, der von der in dem Hohlraum angeordneten Armierung durchgriffen ist.

Aus Druckschrift EP 1 004 796 A2 ist ein Zahnriemen mit einem rechteckigen Querschnitt bekannt, der einen Zahnkörper aufweist, an dem eine sich in axialer Richtung erstreckende Verzahnung ausgebildet ist.

Der Erfindung liegt die Aufgabe zugrunde, ein Antriebskabel mit einem Kunststoffkabelkörper, das hinsichtlich des Geräuschverhaltens hohen Anforderungen genügt, sowie eine Antriebseinheit mit einem derartigen Antriebskabel zu schaffen.

Diese Aufgabe ist erfindungsgemäß durch das Antriebskabel mit den Merkmalen des Patentanspruchs 1 und durch die Antriebseinheit mit den Merkmalen des Patentanspruchs 9 gelöst.

Der Kern der Erfindung besteht mithin darin, dass der Kabelkörper so ausgebildet ist, dass die Verzahnung mit ihren Zahnköpfen in einem Führungsrohr oder dergleichen aufgrund der Taschenflanken zumindest weitgehend kontaktfrei angeordnet sind, was das Risiko eines Ratterns, das heißt eines ungewollten Geräuschverhaltens, verringert. Die Zahnköpfe, die als Rippen angesehen werden können, sind also gegenüber einer virtuell umlaufenden Umfangsfläche des Kabelkörpers in Richtung Kabelachse zurückversetzt. Durch die im Boden der Ausnehmungen, das heißt im Zahnfuß der Verzahnung angeordnete, durchgängige Armierung, die aus einem aussparungsfreien Draht oder Geflecht gebildet sein kann, ist gewährleistet, dass sich das Antriebskabel in seiner Führung sauber ausrichtet, und zwar mit einer Vorspannung, die ein Klappern verhindert. Ein Zahnfuß ist also ein Bereich des Kabelkörpers, der zwischen zwei Zahnköpfen liegt. Die Verzahnung verläuft entlang einer axialen Umfangslinie des Kabelkörpers. Die verzahnungsfreien Bereiche der Umfangsfläche, die in Kabellängsrichtung eine durchgängige, homogene und sprungfreie Profilfläche bilden, können zur Führung genutzt werden. Grundsätzlich ist der Kabelkörper frei von einer Beflockung. Der Kabelkörper ist als extrudiertes Polymerelement ausgestaltet, das einem kreisförmigen oder ovalen Querschnitt folgt.

Bei dem Antriebskabel nach der Erfindung handelt es sich mithin um ein Polymerkabel, das ohne Beflockung einen reibungsarmen Kontakt zu einem Führungselement, wie einem Führungsrohr, haben kann. Durch die Flexibilität, die der Kunststoffkabelkörper bereitstellt, kann zudem ein optimales Eingriffsverhalten an einem Antriebszahnrad hergestellt werden, da eine Vielzahl von Zähnen gleichzeitig in die Verzahnung des Kabelkörpers eingreifen kann. Die entlang der axialen Umfangslinie verlaufende Verzahnung definiert in eindeutiger Weise die Stellung des Antriebskabels gegenüber dem Antriebszahnrad. Ein Verdrehen des Antriebskabels um seine Längsachse im Eingriffsbereich muss natürlich verhindert werden, um einen einwandfreien Betrieb des resultierenden Antriebssystems zu gewährleisten.

Der Kabelkörper des Antriebskabels nach der Erfindung ist ein extrudiertes Polymerelement, das einem kreisförmigen oder auch ovalen Querschnitt folgt. Die Verzahnung bzw. die Zahnköpfe der Verzahnung sind bezogen auf eine von dem Kabelkörper im verzahnungsfreien Bereich definierte und im Verzahnungsbereich virtuell fortgesetzte Umfangsfläche in Richtung Kabelkörperachse zurückgesetzt, so dass die Verzahnung vollständig innerhalb der von dem Kabelkörperumfang gebildeten Führungsfläche liegt.

Der Grundradius des Kabelkörpers ist also größer als der maximale Radius der Zahnkopfstirnflächen bezogen auf eine geometrische Mittelachse des Kabelkörpers. Somit kann ein Kontakt zwischen einer Kabelführung und der Verzahnung verhindert werden, was wiederum das Geräuschverhalten bei einer Betätigung des Antriebskabels begünstigt.

Um eine bevorzugte Biegerichtung des Antriebskabels nach der Erfindung zu erreichen, ist die Armierung, die insbesondere aus einem Stahldraht bzw. einem Stahlgeflecht gebildet sein kann, bezogen auf die geometrische Mittelachse des Kabelkörpers exzentrisch angeordnet und bezogen auf eine Längsmittelebene der Verzahnung seitlich versetzt.

Alternativ kann eine bevorzugte Biegerichtung des Antriebskabels nach der Erfindung auch dadurch erreicht werden, dass die Armierung in der geometrischen Achse des Kabelkörpers angeordnet ist und am Umfang des Kabelkörpers entlang einer definierten Linie eine Materialschwächung in Form einer Nut bzw. axialen Ausnehmung eingebracht ist.

Die exzentrische Anordnung der Armierung oder die axiale Ausnehmung kann innerhalb einer Kabelführung eine zusätzliche Verwindung des Antriebskabels bewirken, so dass das Kabel mit einer gewissen Vorspannung in der Kabelführung angeordnet ist, was wiederum ein ungewünschtes Rattern verhindern kann. Zudem kann durch die entsprechend vorteilhafte Anordnung der Armierung oder der Ausnehmung erreicht werden, dass sich das Antriebskabel selbsttätig in korrekter Weise an dem Antriebszahnrad ausrichtet, ohne dass hierfür spezielle Führungsflächen an dem Antriebskabel erforderlich wären, da das Kabel sich stets in Richtung des kleinsten Flächenträgheitsmoments ausrichtet.

Um sicherzustellen, dass die von der Verzahnung gebildeten Rippen des Antriebskabels kontaktfrei in korrespondierenden Führungen eines Antriebssystems geführt sind, haben die Ausnehmungen jeweils bezogen auf die Umfangsrichtung des Kabelkörpers einen Öffnungsquerschnitt, der weniger als 180° des Umfangs des Kabelkörpers einnimmt. Dies bedeutet, dass der Führungsabschnitt des Antriebskabels von einer Fläche des Antriebskabels gebildet ist, der den Ausnehmungen abgewandt ist und der sich in Umfangsrichtung des Kabelkörpers über einen Bereich von mehr als 180° erstreckt, und zwar unterbrechungsfrei in Kabellängsrichtung.

Die Taschenflanken haben jeweils einen Taschenseitenrand. Zwischen den beiden Taschenseitenwänden einer Ausnehmung erstreckt sich damit ein Führungsabschnitt des Kabelkörpers.

Der Führungsabschnitt des Kabelkörpers weist bei einer speziellen Ausführungsform des Antriebskabels nach der Erfindung mindestens drei in Umfangsrichtung von einander beabstandete Führungsflächen auf, die in Umfangsrichtung gekrümmt ausgebildet sind. Zwischen den Führungsflächen können ebene Flächen oder auch Ausnehmungen des Kabelkörpers angeordnet sein.

Um ein optimales Führungsverhalten des Antriebskabels in einer Kabelführung zu erreichen, sind die Führungsflächen bzw. axiale Mittellinien der Führungsflächen in Umfangsrichtung jeweils etwa um 120° zueinander versetzt.

Um die Position des Kabelkörpers bzw. dessen Drehstellung in Einbaulage exakt zu definieren, kann der Kabelkörper an seinem Umfang zusätzlich eine axiale Ausnehmung aufweisen, in die eine Führungsrippe der Kabelführung eingreift. Insbesondere kann die Ausnehmung auch von einer Abflachung des Kabelkörpers gebildet sein, die an einer korrespondierenden Abstützfläche der Kabelführung anliegt. Es kann auch eine Rippe am Umfang des Kabelkörpers ausgebildet sein, die in eine Nut der Kabelführung eingreift.

Des Weiteren hat die Erfindung eine Antriebseinheit für ein gegenüber einem Fahrzeugaufbau bewegliches Fahrzeugelement zum Gegenstand, umfassend ein Antriebszahnrad und mindestens ein Antriebskabel gemäß der vorstehend beschriebenen Art.

Um ein Zahnspringen im Eingriffsbereich zwischen dem Antriebskabel und dem Antriebszahnrad zu verhindern, stehen diese beiden Elemente bei einer bevorzugten Ausführungsform der Antriebseinheit nach der Erfindung über eine einer Kreislinie folgenden Kontaktlinie in Eingriff. Damit ist stets gewährleistet, dass mehrere Zähne des Antriebszahnrads in die Verzahnung des Antriebskabels eingreifen.

Bei einer speziellen Ausführungsform der Antriebseinheit nach der Erfindung erstreckt sich die Kontaktlinie bezogen auf den Umfang des Antriebszahnrads über mindestens 30°. Denkbar ist es auch, dass sich die Kontaktlinie über 180° und mehr erstreckt.

Bei einer weiteren speziellen Ausführungsform der Antriebseinheit nach der Erfindung steht das Antriebszahnrad mit zwei Antriebskabeln der oben beschriebenen Art in Eingriff, wobei die beiden Antriebskabel in Achsrichtung des Antriebszahnrads zueinander versetzt sind. Das Antriebszahnrad weist dann vorzugsweise zwei in axialer Richtung voneinander beabstandete Verzahnungen auf, von denen jede einem der beiden Antriebskabel zugeordnet ist. Insbesondere bei Antriebskabeln, die in verschiedenen Ebenen mit dem Antriebszahnrad in Eingriff stehen, kann ein Umschlingungswinkel von mindestens etwa 180° realisiert werden.

Weitere Vorteile und vorteilhafte Ausgestaltungen des Gegenstandes der Erfindung sind der Beschreibung, der Zeichnung und den Patentansprüchen entnehmbar.

Ausführungsbeispiele von Antriebseinheiten nach der Erfindung und von Antriebskabeln nach der Erfindung sind in der Zeichnung schematisch vereinfacht dargestellt und werden in der nachfolgenden Beschreibung näher erläutert. Es zeigt:
- Figur 1: eine schematische Draufsicht auf ein Fahrzeugdach mit einer Antriebseinheit für ein bewegliches Deckelelement;
- Figur 2: eine vergrößerte Ansicht eines Antriebszahnrads und zweier Antriebskabel der Antriebseinheit;
- Figur 3: eine alternative Ausführungsform eines Eingriffs eines Antriebszahnrads in zwei Antriebskabel;
- Figur 4: eine weitere alternative Ausführungsform des Eingriffs eines Antriebszahnrads in zwei Antriebskabel;
- Figur 5: ein Antriebszahnrad und zwei mit diesen in unterschiedlichen Ebenen im Eingriff stehende Antriebskabel;
- Figur 6: eine perspektivische Ansicht eines nicht von der Erfindung erfassten Antriebskabels;
- Figur 7: eine Draufsicht auf das Antriebskabel nach Figur 6;
- Figur 8: einen Schnitt durch das Antriebskabel entlang der Linie VIII-VIII in Figur 7 zusammen mit einem Antriebszahnrad;
- Figur 9: eine perspektivische Ansicht einer alternativen Ausführungsform eines ebenfalls nicht von der Erfindung erfassten Antriebskabels;
- Figur 10: eine Draufsicht auf das Antriebskabel nach Figur 9;
- Figur 11: einen Schnitt durch das Antriebskabel entlang der Linie XI-XI in Figur 10;
- Figur 12: eine perspektivische Ansicht einer Ausführungsform eines Antriebskabels nach der Erfindung;
- Figur 13: einen Schnitt durch das Antriebskabel nach Figur 12 entlang der Linie XIII-XIII in Figur 12;
- Figur 14: eine perspektivische Ansicht einer weiteren Ausführungsform eines nicht von der Erfindung erfassten Antriebskabels;
- Figur 15: eine Draufsicht auf das Antriebskabel nach Figur 14;
- Figur 16: einen Schnitt durch das Antriebskabel nach Figur 14 entlang der Linie XVI-XVI in Figur 15;
- Figur 17: einen Schnitt durch das Antriebskabel nach Figur 14 entlang der Linie XVII-XVII in Figur 15;
- Figur 18: einen Schnitt durch das Antriebskabel nach Figur 14 entlang der Linie XVIII-XVIII in Figur 15;
- Figur 19: eine perspektivische Ansicht einer weiteren Ausführungsform eines nicht von der Erfindung erfassten Antriebskabels;
- Figur 20: einen Schnitt durch das Antriebskabel nach Figur 19 entlang der Linie XX-XX in Figur 19;
- Figur 21: einen Schnitt durch das Antriebskabel nach Figur 19 entlang der Linie XXI-XXI in Figur 19;
- Figur 22: eine perspektivische Ansicht einer weiteren Ausführungsform eines nicht von der Erfindung erfassten Antriebskabels;
- Figur 23: einen Schnitt durch das Antriebskabel nach Figur 22 entlang der Linie XXIII-XXIII in Figur 22;
- Figur 24: eine perspektivische Ansicht einer weiteren Ausführungsform eines nicht von der Erfindung erfassten Antriebskabels; und
- Figur 25: einen Schnitt durch das Antriebskabel nach Figur 24 entlang der Linie XXV-XXV in Figur 24.

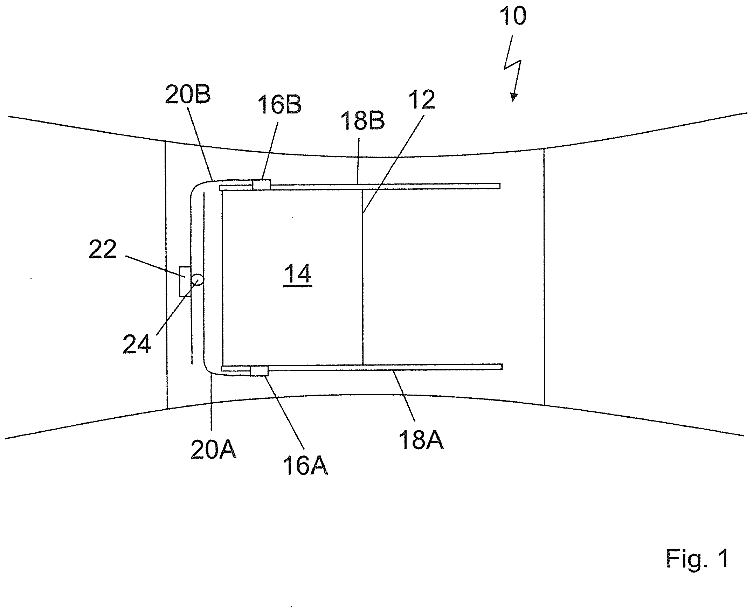

In Figur 1 ist ein Fahrzeugdach 10 eines ansonsten nicht näher dargestellten Personenkraftwagens dargestellt, das eine Dachöffnung 12 aufweist, die mittels eines Deckelelements 14 wahlweise geschlossen oder zumindest teilweise freigegeben werden kann. Das Deckelelement 14 stellt somit ein gegenüber dem Fahrzeugaufbau bewegliches Fahrzeugelement dar.

Um das Deckelelement 14 verstellen zu können, ist eine Verstellkinematik vorgesehen, die bezogen auf eine vertikale Dachlängsmittelebene beidseits jeweils einen Antriebsschlitten 16A bzw. 16B aufweist, der in einer jeweiligen, sich in Dachlängsrichtung erstreckenden Führungsschiene 18A bzw. 18B geführt ist.

An die Antriebsschlitten 16A und 16B ist jeweils ein drucksteifes Antriebskabel 20A bzw. 20B angebunden. Die Antriebskabel 20A und 20B sind über entsprechende Führungsrohre zu einem gemeinsamen Antriebsmotor 22 geführt und stehen mit einem gemeinsamen Antriebszahnrad 24 desselben in Eingriff. Der Antriebsmotor 22 mit seinem Antriebszahnrad 24 und die Antriebskabel 20A und 20B bilden also eine Antriebseinheit für das Deckelelement 14.

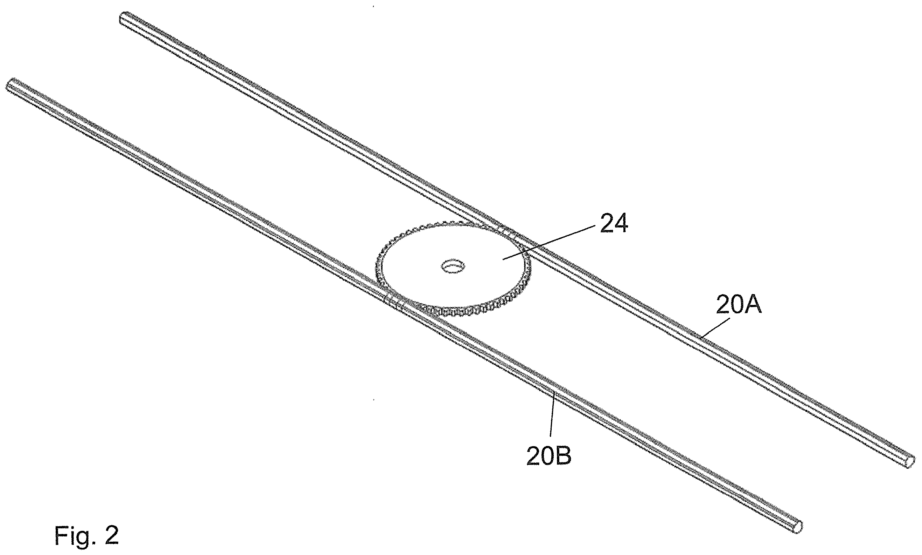

Bei der in den Figuren 1 und 2 dargestellten Ausführungsform haben die Antriebskabel 20A und 20B im Bereich des Antriebszahnrads 24 jeweils einen geraden Verlauf.

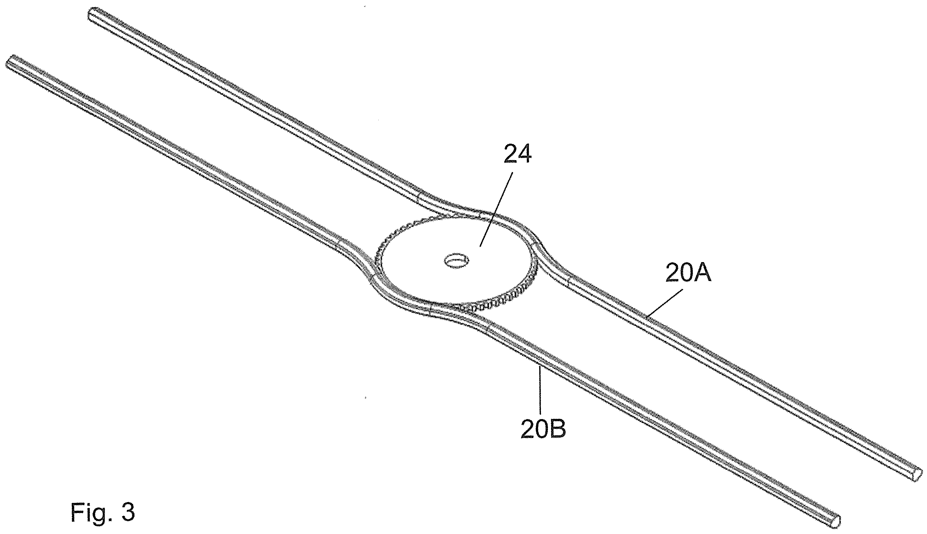

Die Antriebskabel 20A und 20B, die jeweils einen aus Kunststoff gefertigten Kabelkörper aufweisen, können aber bei alternativen Ausführungsformen einer Antriebseinheit auch über eine Kontaktlinie mit dem Antriebszahnrad 24 in Eingriff stehen, die einer Kreislinie folgt, so dass der Eingriff von mehreren Zähnen des Antriebszahnrads 24 in die Antriebkabel 20A und 20B gewährleistet ist. So zeigt Figur 3 eine Antriebseinheit, bei der die Antriebskabel 20A und 20B jeweils über eine gekrümmte Kontaktlinie mit dem Antriebszahnrad in Eingriff stehen, wohingegen die Abschnitte der Antriebskabel 20A und 20B, die einerseits auf der Lastseite und andererseits auf der unbelasteten Seite angeordnet sind, jeweils miteinander fluchten.

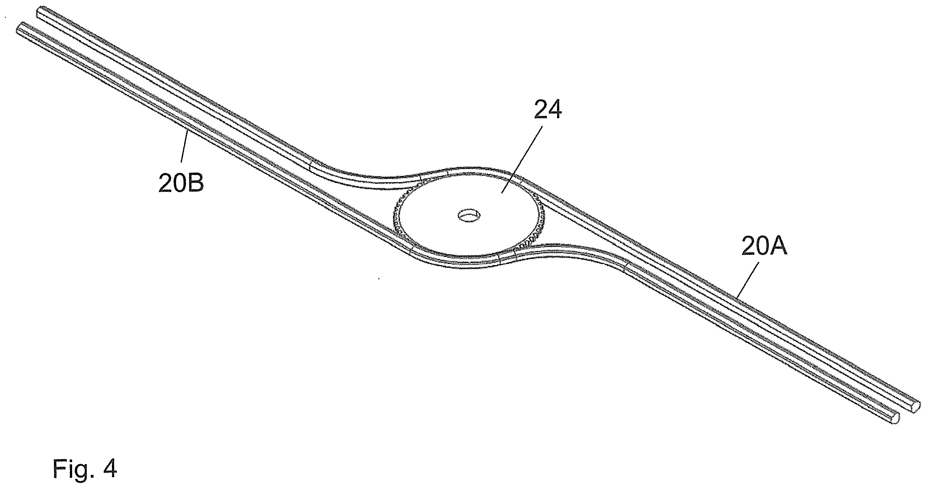

Figur 4 zeigt eine Ausführungsform einer Antriebseinheit, bei der die Antriebskabel 20A und 20B jeweils auf der Lastseite tangential an das Antriebszahnrad 24 geführt sind und dort über eine bogenförmige Kontaktlinie mit dem Antriebszahnrad 24 in Eingriff stehen und auf der nicht belasteten Seite mit einer gegensinnigen Krümmung in einen auslaufenden geraden Bereich übergehen. Auch bei dieser Ausführungsform, bei der die Antriebskabel 20A und 20B im Bereich des Antriebzahnrads 24 einen S-förmigen Verlauf haben, stehen jeweils eine Vielzahl von Zähnen des Antriebszahnrads 24 mit den Antriebskabeln 20A und 20B in Eingriff.

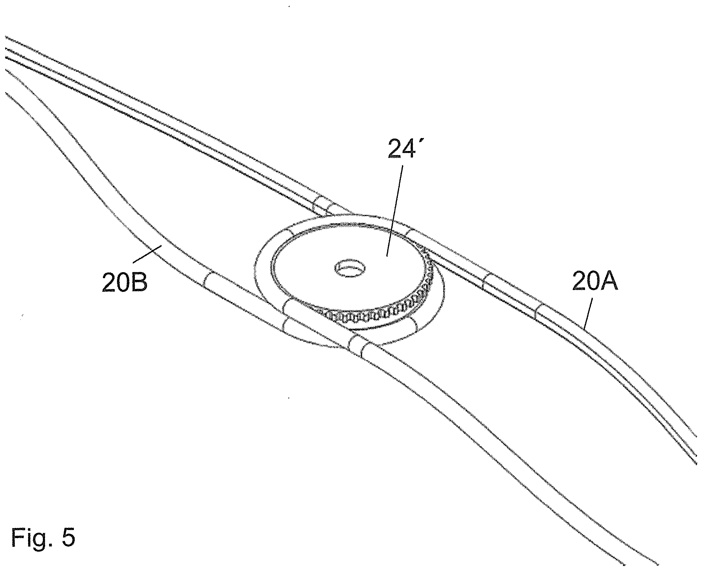

Figur 5 zeigt eine weitere alternative Ausführungsform einer Antriebseinheit. Diese Antriebseinheit umfasst ein Antriebszahnrad 24', das bezogen auf die Achse des Antriebszahnrads 24' zwei axial zueinander versetzte Verzahnungen aufweist, von denen jede mit einem Antriebskabel 20A bzw. 20B in Eingriff steht. Die Antriebskabel 20A und 20B umschlingen das Antriebszahnrad 24' jeweils in Umfangsrichtung in einem Bereich von etwa 180°. Damit ist ein sicherer Eingriff des Antriebszahnrads 24' in die Antriebskabel 20A und 20B gewährleistet.

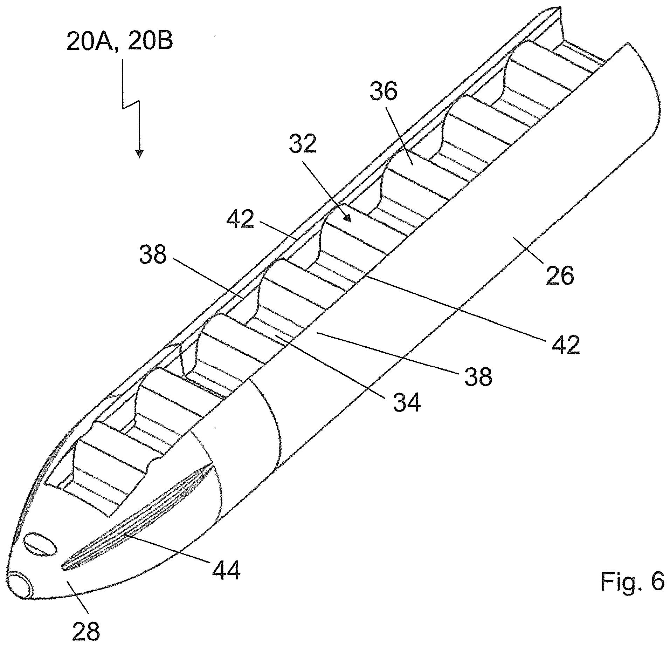

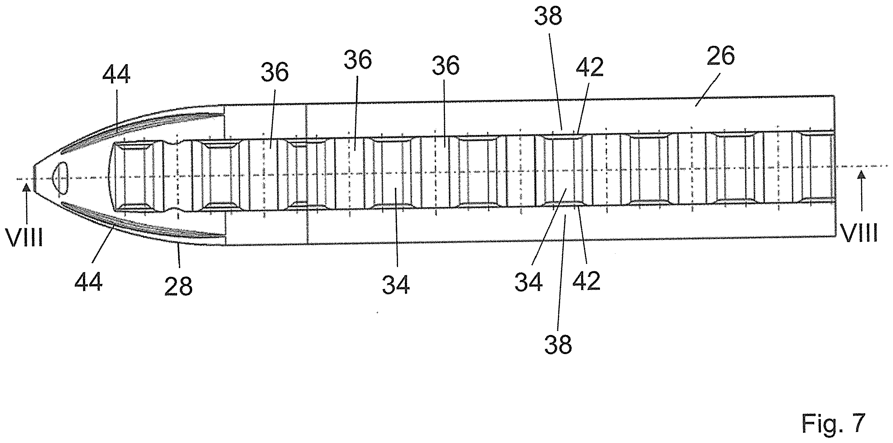

Wie bereits oben erwähnt, sind die Antriebskabel 20A und 20B als Kunststoffantriebskabel ausgeführt. Ein derartiges Antriebskabel 20A bzw. 20B ist in den Figuren 6 bis 8 detailliert dargestellt und umfasst einen Kabelkörper 26 aus Kunststoff, dessen Umfang eine in Umfangsrichtung unterbrochene Zylinderfläche bildet und der einen sich verjüngenden Endbereich 28 aufweist. Der Kabelkörper 26 bildet eine Umfangsfläche des Antriebskabels 20A bzw. 20B, die sich in Umfangsrichtung über einen Winkel von etwa 270° bis 300° erstreckt und einen Führungsabschnitt des Kabelkörpers 26 bildet, der von einer Verzahnung 32 unterbrochen ist.

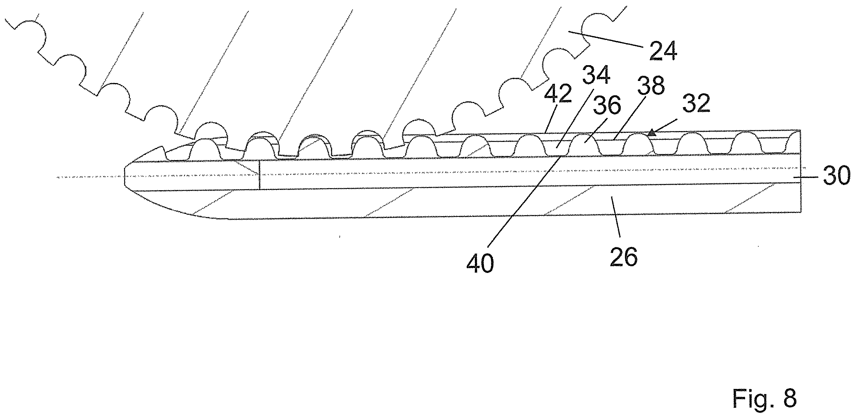

Wie insbesondere Figur 8 zeigt, ist der Kabelkörper 26 von einer aussparungsfreien Armierung 30 durchgriffen, die aus Stahldraht gebildet ist und in der neutrale Faser bzw. in der geometrischen Achse des Kabelkörpers 26 angeordnet ist, das heißt bezogen auf die zylindrische Ausbildung des Kabelkörpers 26 zentrisch angeordnet ist.

In den Kabelkörper 26 ist die Verzahnung 32 eingeprägt, die durch in Längsrichtung des Kabelkörpers 26 regelmäßig beabstandete, taschenartige Ausnehmungen 34 gebildet ist, welche jeweils in Kabellängsrichtung von Flanken von resultierenden Zahnköpfen 36 und in Kabelquerrichtung beidseits jeweils von einer von dem Kabelkörper 26 gebildeten Taschenflanke 38 begrenzt sind. Mit ihrem Boden begrenzen die Ausnehmungen 34 jeweils einen Zahnfuß 40, der von der Armierung 30 durchgriffen bzw. untergriffen ist.

Die Taschenflanken 38 haben jeweils einen Taschenseitenrand 42, gegenüber dem die rippenartigen Zahnköpfe 36 in Richtung der Armierung 30 zurückversetzt sind. Zwischen den Stirnflächen der Zahnköpfe 36 und dem Umfang des Kabelkörpers 26 ist also jeweils eine kleine Stufe ausgebildet. Durch die Taschenflanken 38 und durch die gegenüber den Taschenflanken 38 niedrigeren Zahnköpfe 36 kann verhindert werden, dass die Zahnköpfe 36 mit Führungen des jeweiligen Antriebskabels 20A bzw. 20B in Kontakt stehen, so dass ein etwaiges hierdurch bedingtes Rattern verhindert werden kann.

Der Endbereich 28 des Kabelkörpers 26 weist beidseits jeweils eine Führungsnut 44 auf, über die das Antriebskabel 20A bzw. 20B bezogen auf seine Drehstellung positionsgenau an das Antriebszahnrad 24 herangeführt werden kann, was eine einfache Montage der resultierenden Antriebseinheit gewährleistet.

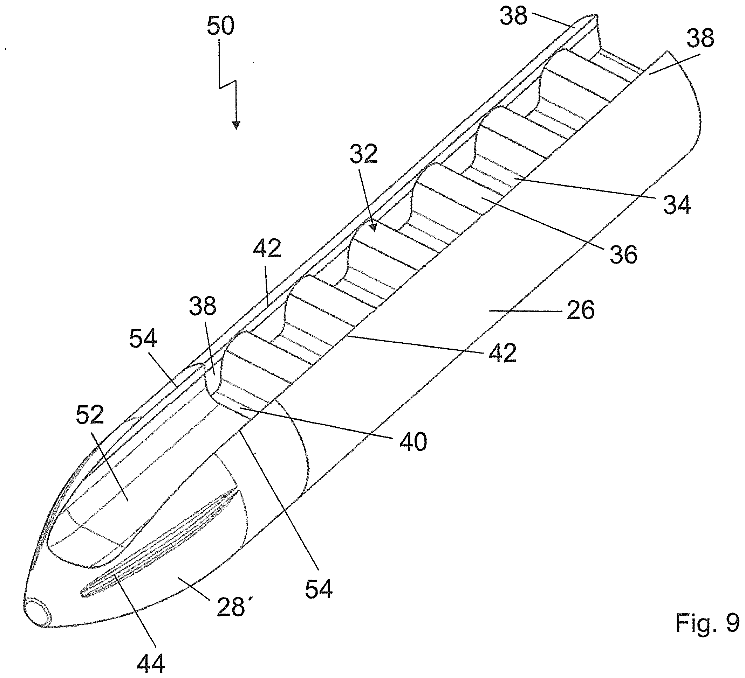

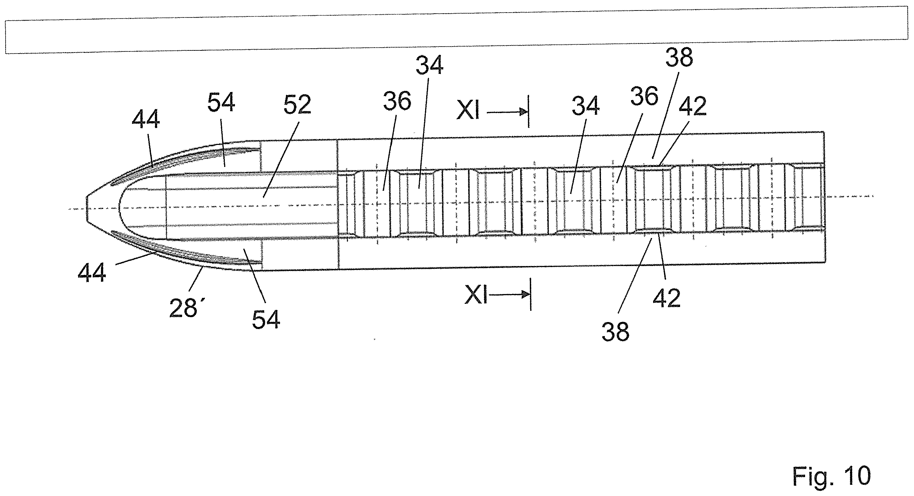

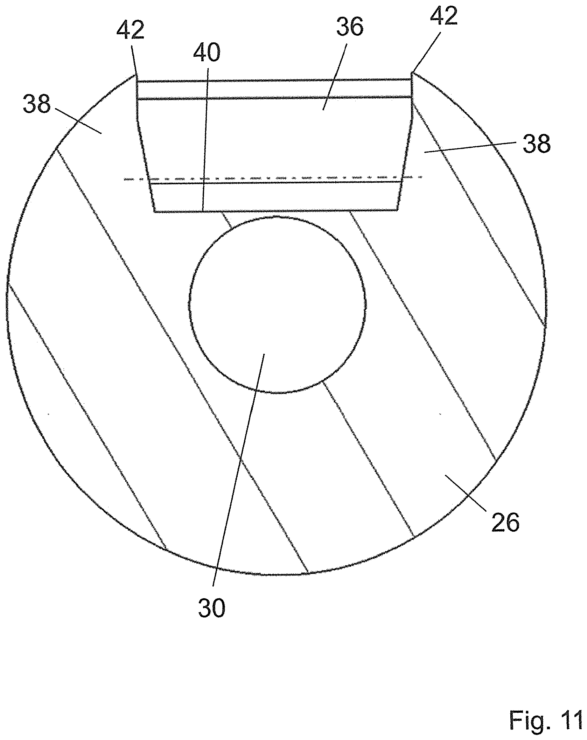

In den Figuren 9 bis 11 ist eine alternative Ausführungsform eines Antriebskabels 50 dargestellt, die weitgehend dem in den Figuren 6 bis 8 dargestellten Antriebskabel entspricht, sich von diesem aber durch einen Endbereich 28' unterscheidet, der eine Einlaufbahn 52 aufweist, die sich in Kabellängsrichtung erstreckt und die dazu dient, dass bei der Montage das Antriebskabel 50 positionsgenau und einen sicheren Eingriff gewährleistend an das betreffende Antriebszahnrad 24 herangeführt werden kann. Die Einlaufbahn hat bezogen auf die Kabellängsrichtung beidseits jeweils eine Einlaufflanke 54, die mit den auf der entsprechenden Seite angeordneten Taschenflanken 38 der Ausnehmungen 34 der Verzahnung 32 fluchtet. Entsprechend fluchtet ein Boden der Einlaufbahn 52 mit den Zahnfüßen 40 der Verzahnung 32.

Im Übrigen entspricht das Antriebskabel 50 dem in den Figuren 6 bis 8 dargestellten Antriebskabel.

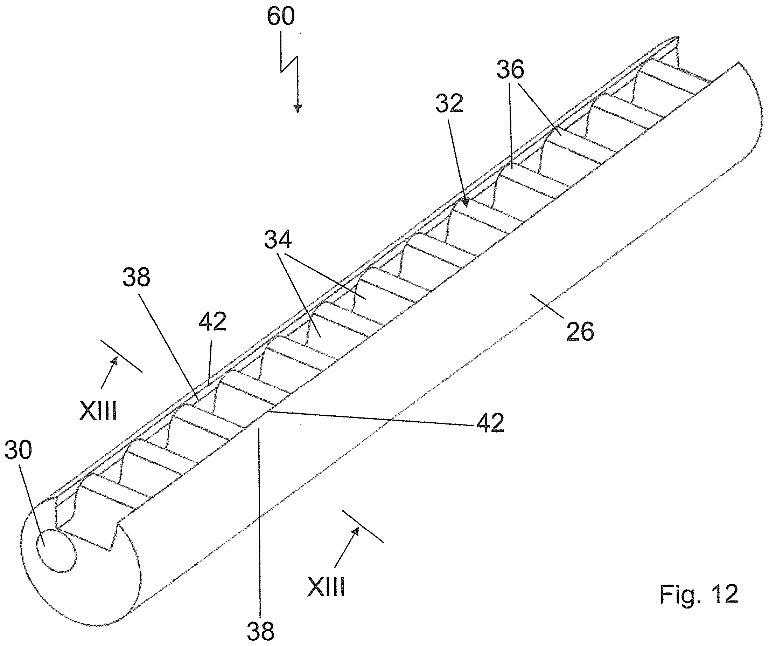

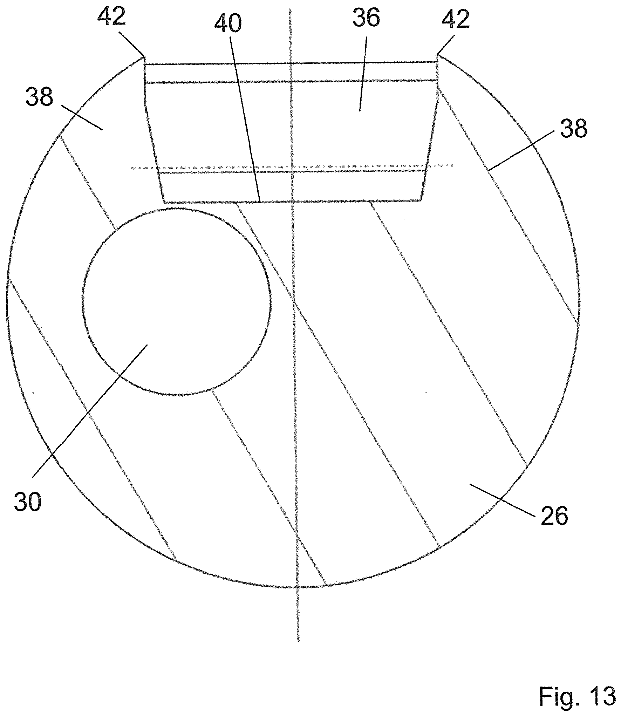

In den Figuren 12 und 13 ist eine weitere Ausführungsform eines Antriebskabels 60 dargestellt, die sich von dem Antriebskabel nach den Figuren 9 bis 11 dadurch unterscheidet, dass sie eine Armierung 30 aufweist, die aus einem Stahldraht oder einem Stahlgeflecht gebildet ist und bezogen auf die geometrische Achse des Kabelkörpers 26 exzentrisch angeordnet ist. Wie insbesondere der Zeichnung zu entnehmen ist, ist die Armierung 30 bezogen auf eine Längsmittelebene der Verzahnung 32, die sich in Kabellängsrichtung erstreckt, seitlich versetzt.

Im Übrigen entspricht das Antriebskabel 60 dem Antriebskabel nach den Figuren 9 bis 11.

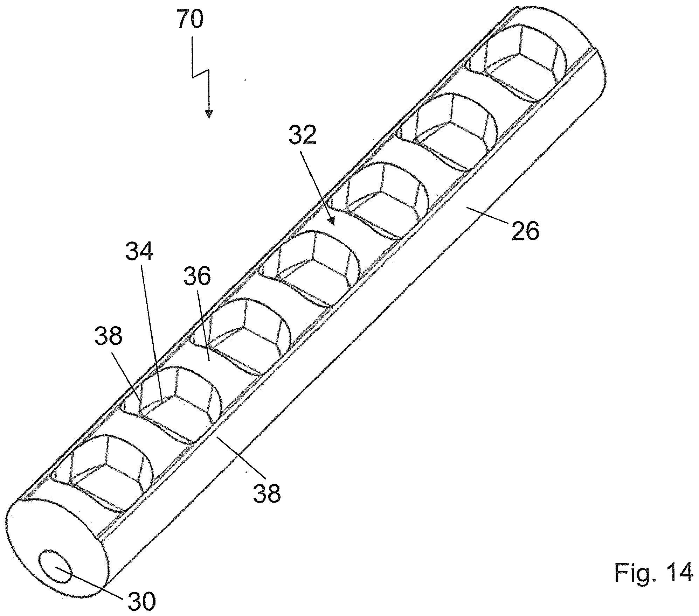

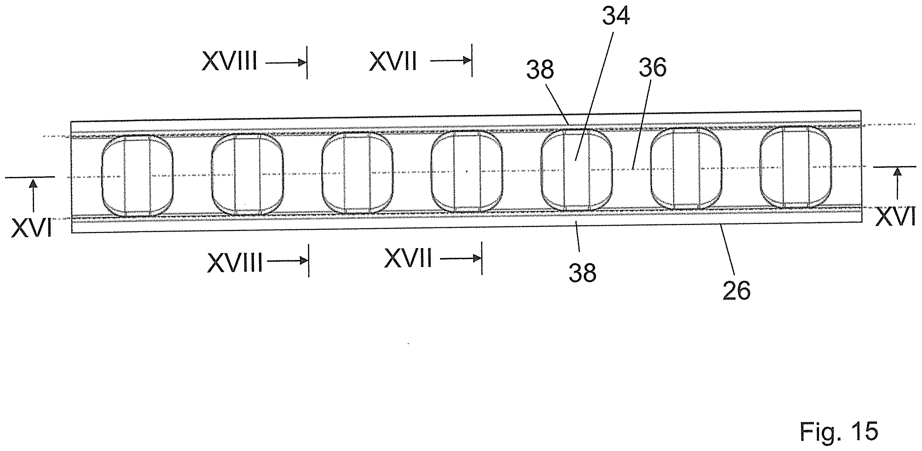

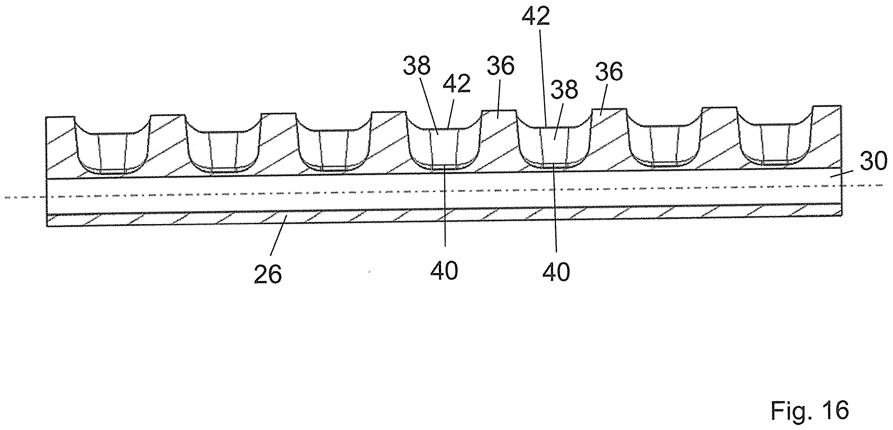

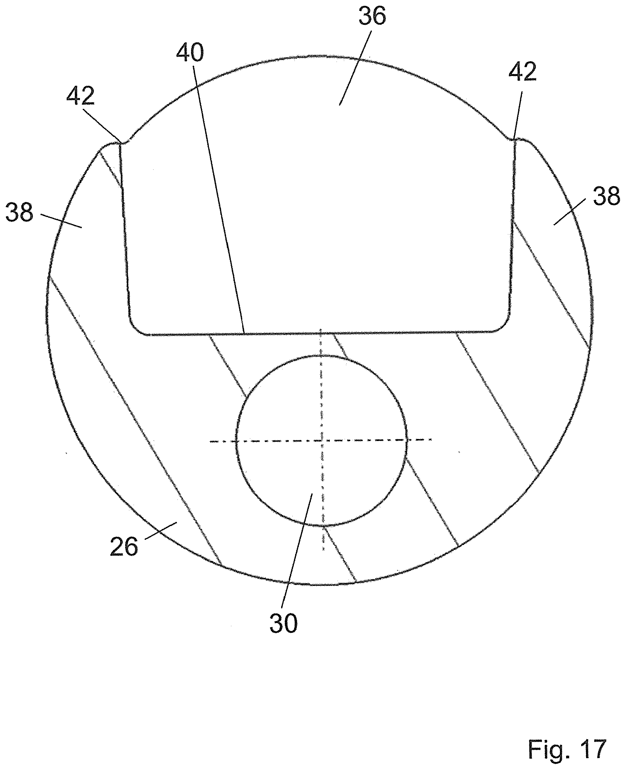

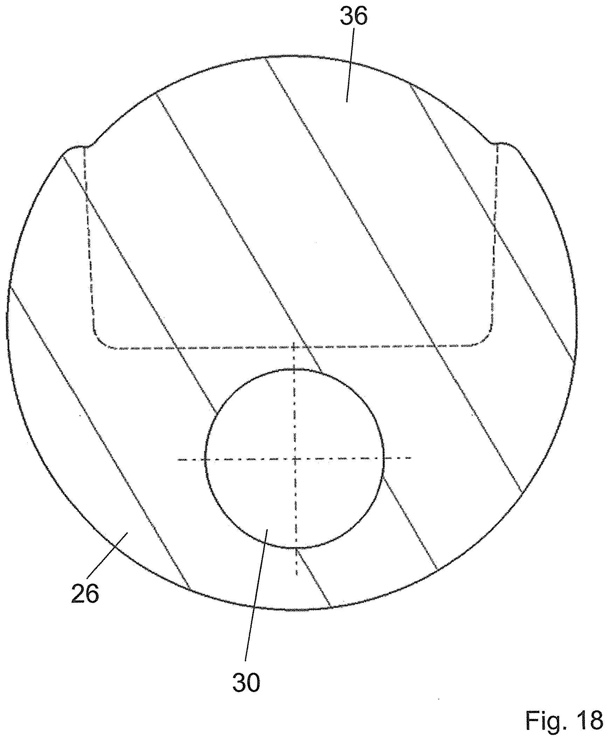

In den Figuren 14 bis 18 ist eine weitere Ausführungsform eines Antriebskabels 70 dargestellt, das ebenfalls einen zumindest weitgehend zylindrisch ausgebildeten Kabelkörper 26 aufweist, der mit einer Verzahnung 32 versehen ist, die durch Ausnehmungen 34 gebildet ist, die in Längsrichtung des Kabelkörpers 26 regelmäßig beabstandet und taschenartig ausgebildet sind. Zwischen den Ausnehmungen 34 sind Querwände ausgebildet, die Zahnköpfe 36 bilden, deren Flanken die Ausnehmungen 34 in Kabellängsrichtung begrenzen. In Querrichtung sind die Ausnehmungen 34 durch Taschenflanken 38 begrenzt. Mit ihren Böden bilden die Ausnehmungen 34 jeweils einen Zahnfuß 40, der von einer Armierung 30 durchgriffen ist. Die Armierung 30 ist bezogen auf die geometrische Achse des Kabelkörpers 26 exzentrisch versetzt, und zwar in der von den Ausnehmungen 34 abgewandten Richtung. Damit können die Zahnköpfe 36 eine Höhe aufweisen, die einen sicheren Eingriff der Zähne des korrespondierenden Antriebszahnrads gewährleistet.

Die Zahnköpfe 36 haben eine Stirnfläche, die einer Zylinderfläche folgt, deren Radius kleiner ist als der Radius der Zylinderfläche, die den Umfang des Kabelkörpers 26 definiert. Damit ist ein Kontakt der Zahnköpfe 36 mit einer Führung für das Antriebskabel 70 ausgeschlossen.

Die Zahnköpfe 36 der Verzahnung 32 haben also eine obere Begrenzungsfläche, die bogenförmig ausgebildet ist und gegenüber einer virtuellen Zylinderfläche, die von den Führungsflächen 84 definiert ist, in Richtung der Achse des Kabelkörpers 26 zurückversetzt ist.

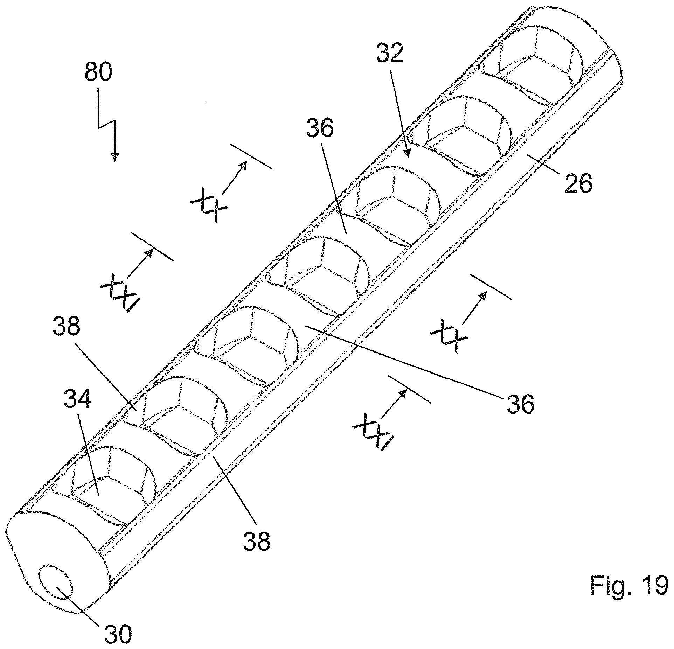

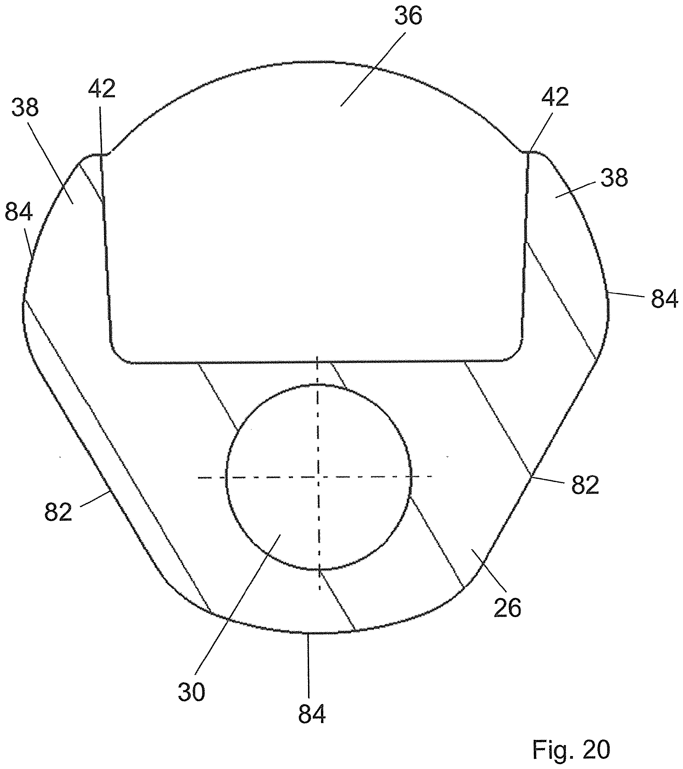

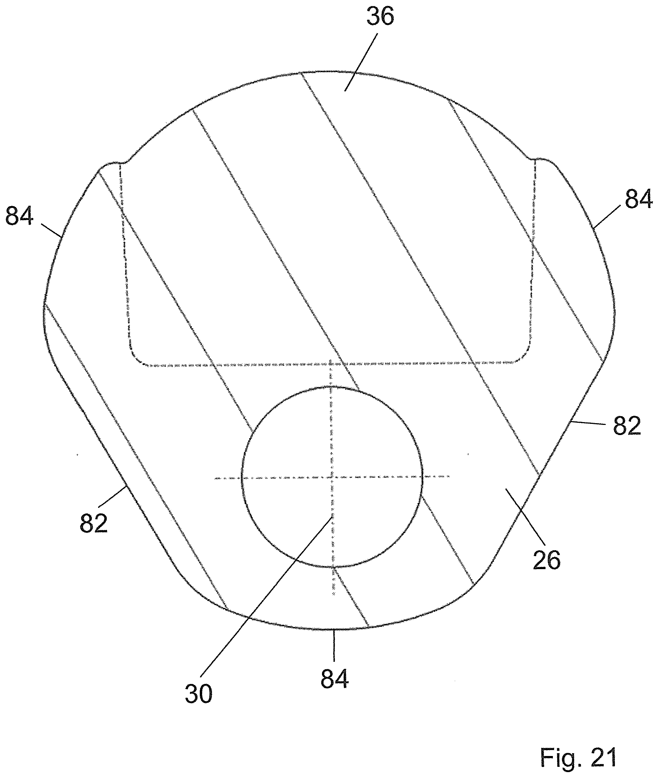

In den Figuren 19 bis 21 ist eine weitere Ausführungsform eines Antriebskabels 80 dargestellt, das sich von der Ausführungsform nach den Figuren 14 bis 18 dadurch unterscheidet, dass es einen Kabelkörper 26 aufweist, der zwei Abflachungen 82 im Führungsabschnitt aufweist, so dass drei Führungsflächen 84 gebildet sind, deren Längsmittelebenen um etwa 120° zueinander versetzt sind. Die Führungsflächen 84 bilden die Abstützung des Antriebskabels 80 in einer korrespondierenden Kabelführung. Wie auch bei den vorstehend beschriebenen Ausführungsformen hat der Führungsabschnitt abgesehen von einem Kabelendabschnitt in Kabellängsrichtung einen einheitlichem, durchgängigen Querschnitt. Die Abflachungen 82 bilden Ausrichtflächen, über die sich das Antriebskabel 80 zum Definieren der Drehstellung in Einbaulage an einer korrespondierenden Abstützfläche einer Kabelführung ausrichten kann. Damit kann ein sicherer Eingriff mit einem Antriebszahnrad gewährleistet werden.

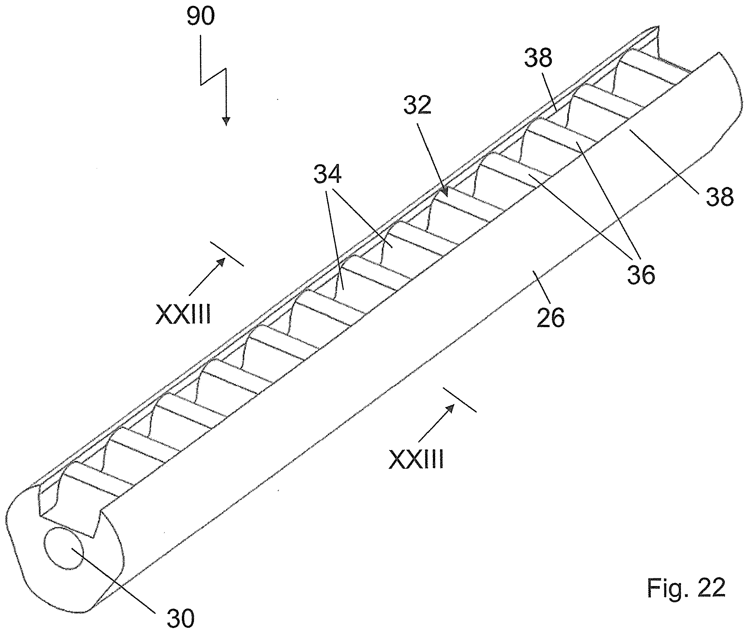

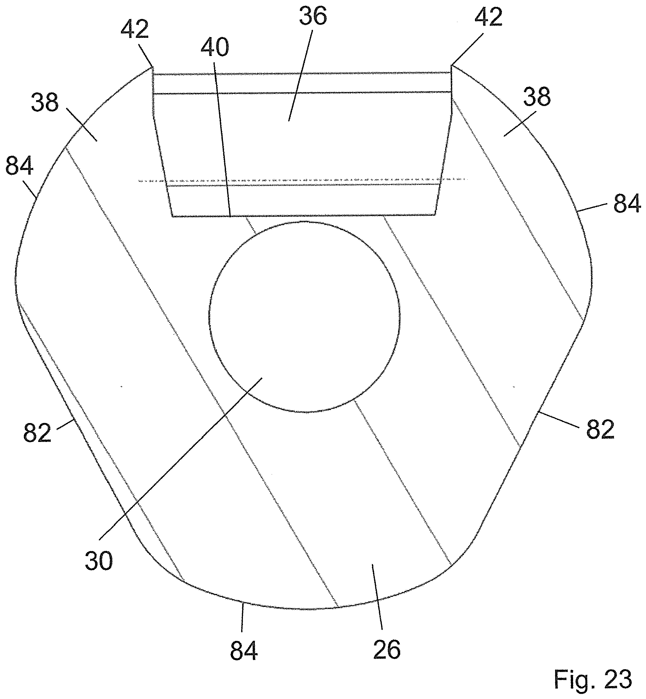

In den Figuren 22 und 23 ist eine weitere Ausführungsform eines Antriebskabels 90 dargestellt, dessen Kabelkörper im Wesentlichen dem Kabelkörper des Antriebskabels nach den Figuren 19 bis 21 entspricht, sich von diesem aber dadurch unterscheidet, dass es eine Verzahnung aufweist, die entsprechend der Verzahnung des Antriebskabels nach den Figuren 6 bis 8 ausgebildet ist. Zudem ist die Armierung 30 in der geometrischen Achse des Kabelkörpers 26 angeordnet.

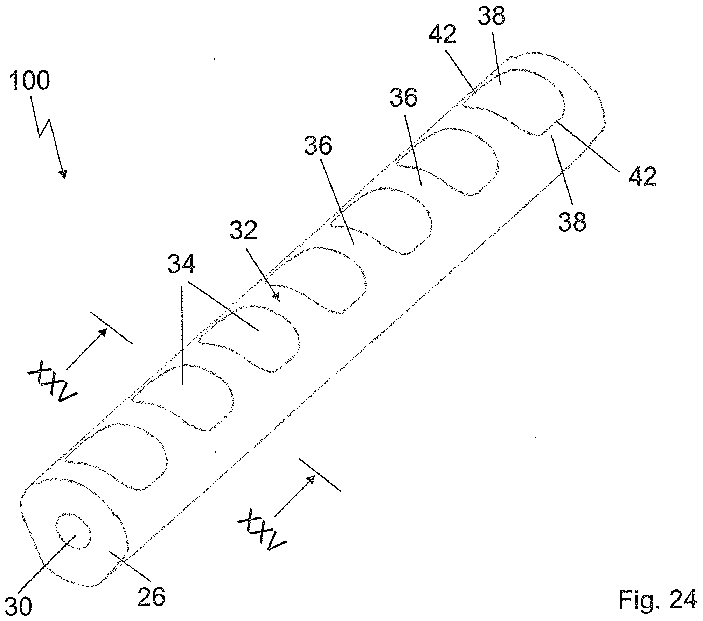

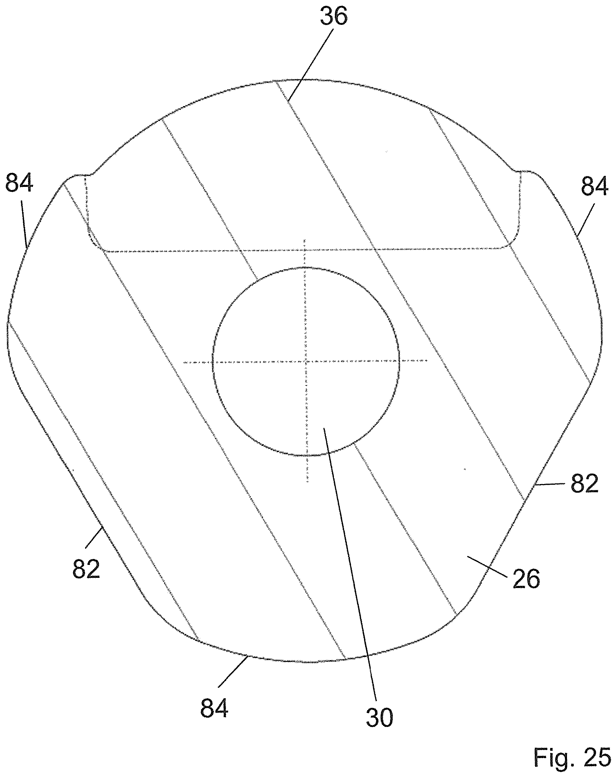

In den Figuren 24 und 25 ist ein Antriebskabel 100 dargestellt, das im Wesentlichen dem Antriebskabel nach den Figuren 19 bis 21 entspricht, sich von diesem aber dadurch unterscheidet, dass die Armierung 30 in der geometrischen Achse des Kabelkörpers 26 angeordnet ist. Dadurch verringert sich die Tiefe der die Verzahnung bildenden Ausnehmungen 34.

Im Übrigen entspricht das Antriebskabel 100 demjenigen nach den Figuren 19 bis 21.

### Bezugszeichenliste

- 10: Fahrzeugdach
- 12: Dachöffnung
- 14: Deckelelement
- 16A, B: Antriebsschlitten
- 18A, B: Führungsschiene
- 20A, B: Antriebskabel
- 22: Antriebsmotor
- 24: Antriebzahnrad
- 26: Kabelkörper
- 28: Endbereich
- 30: Armierung
- 32: Verzahnung
- 34: Ausnehmung
- 36: Zahnkopf
- 38: Taschenflanke
- 40: Zahnfuß
- 42: Taschenseitenrand
- 44: Führungsnut
- 50: Antriebskabel
- 52: Einlaufbahn
- 54: Einlaufflanke
- 60: Antriebskabel
- 70: Antriebskabel
- 80: Antriebskabel
- 82: Abflachung
- 84: Führungsfläche
- 90: Antriebskabel
- 100: Antriebskabel

## Patentansprüche

1. Antriebskabel zur Betätigung eines gegenüber einem Fahrzeugaufbau beweglichen Fahrzeugelements, umfassend einen Kabelkörper (26) aus Kunststoff, der eine sich in axialer Richtung erstreckende Verzahnung (32) zum Eingriff mit einem Antriebszahnrad (24) aufweist und den eine sich in axialer Richtung erstreckende, durchgängige Armierung (30) durchgreift, wobei die Verzahnung (32) durch in axialer Richtung regelmäßig beabstandete, taschenartige Ausnehmungen (34) gebildet ist, die in Kabellängsrichtung von Flanken von resultierenden Zahnköpfen (36) und in Kabelquerrichtung beidseits jeweils von einer Taschenflanke (38) begrenzt sind und die jeweils bodenseitig von einem Zahnfuß (40) begrenzt sind, der von der durchgängigen Armierung (30) durchgriffen ist, **dadurch gekennzeichnet, dass** die Zahnköpfe (36) der Verzahnung (32) bezogen auf eine von dem Kabelkörper (26) im verzahnungsfreien Bereich definierte und im Verzahnungsbereich virtuell fortgesetzte Umfangsfläche in Richtung Kabelkörperachse zurückgesetzt sind, so dass die Verzahnung (32) vollständig innerhalb der von dem Kabelkörper (26) definierten Umfangsfläche liegt, und der Kabelkörper (26) ein extrudiertes Polymerelement ist, das einem kreisförmigen oder ovalen Querschnitt folgt, wobei die Armierung (30) bezogen auf eine geometrische Achse des Kabelkörpers exzentrisch angeordnet ist und bezogen auf eine Längsmittelebene der Verzahnung (32) seitlich versetzt ist.

2. Antriebskabel nach Anspruch 1, **dadurch gekennzeichnet, dass** die Ausnehmungen (34) jeweils bezogen auf die Umfangsrichtung des Kabelkörpers (26) einen Öffnungsquerschnitt haben, der weniger als 180° in Umfangsrichtung des Kabelkörpers (26) einnimmt.

3. Antriebskabel nach Anspruch 1 oder 2, **dadurch gekennzeichnet, dass** die Ausnehmungen (34) in Kabelquerrichtung jeweils beidseits einen Taschenseitenrand (42) haben und sich zwischen den beiden Taschenseitenrändern (42) einer Ausnehmung (34) ein Führungsabschnitt des Kabelkörpers (26) erstreckt.

4. Antriebskabel nach Anspruch 3, **dadurch gekennzeichnet, dass** der Führungsabschnitt mindestens drei in Umfangsrichtung voneinander beabstandete Führungsflächen (84) aufweist.

5. Antriebskabel nach Anspruch 4, **dadurch gekennzeichnet, dass** die Führungsflächen (84) axiale Mittellinien aufweisen, die jeweils in Umfangsrichtung etwa 120° zueinander versetzt sind.

6. Antriebskabel nach einem der Ansprüche 1 bis 5, **dadurch gekennzeichnet, dass** der Kabelkörper (26) im Bereich der Zahnköpfe (36) einen zumindest angenähert kreisförmigen Querschnitt hat.

7. Antriebskabel nach einem der Ansprüche 1 bis 6, **dadurch gekennzeichnet, dass** der Kabelkörper (26) an seinem Umfang eine axiale Ausnehmung hat.

8. Antriebskabel nach Anspruch 7, **dadurch gekennzeichnet, dass** die Ausnehmung von einer Abflachung (82) des Kabelkörpers (26) gebildet ist, mittels der das Antriebskabel durch Anlage an einer korrespondierenden Führungsfläche einer Kabelführung in Umfangsrichtung ausrichtbar ist.

9. Antriebseinheit für ein gegenüber einem Fahrzeugaufbau bewegliches Fahrzeugelement, umfassend ein Antriebszahnrad (24, 24') und mindestens ein Antriebskabel (20A, 20B) nach einem der Ansprüche 1 bis 8.

10. Antriebseinheit nach Anspruch 9, **dadurch gekennzeichnet, dass** das Antriebskabel (20A, 20B) und das Antriebszahnrad (24, 24') über eine einer Kreislinie folgenden Kontaktlinie in Eingriff stehen.

11. Antriebseinheit nach Anspruch 10, **dadurch gekennzeichnet, dass** sich die Kontaktlinie bezogen auf den Umfang des Antriebszahnrads (24, 24') über mindestens 30° erstreckt.

12. Antriebseinheit nach Anspruch 11, **dadurch gekennzeichnet, dass** das Antriebszahnrad (24') mit zwei Antriebskabeln (20A, 20B) nach einen der Ansprüche 1 bis 8 in Eingriff steht und die beiden Antriebskabel (20A, 20B) bezogen auf die Achse des Antriebszahnrads (24') zueinander versetzt sind.

13. Antriebseinheit nach Anspruch 12, **dadurch gekennzeichnet, dass** die beiden Antriebskabel (20A, 20B) und das Antriebszahnrad (24') jeweils über einen Umschlingungswinkel von etwa 180° in Eingriff stehen.

## Claims

1. A drive cable for actuating a vehicle element which is mobile relative to a vehicle structure, the drive cable comprising a plastic cable body (26) which has a toothing (32) extending in the axial direction to become engaged with a driving gear wheel (24) and is penetrated by a continuous reinforcement (30) which extends in the axial direction, the toothing (32) being formed by pocket-like recesses (34) which are regularly spaced in the axial direction and limited by flanks of resulting tooth tips (36) in the longitudinal direction of the cable and by pocket flanks (38) on both sides in the transverse direction of the cable and each limited at the bottom by a tooth root (40) which is penetrated by the continuous reinforcement (30) **characterized in that** the tooth tips (36) of the toothing (32) are recessed in the direction of the cable body axis with respect to a circumferential surface defined by the cable body (26) in the tooth-free portion and virtually continuous in the toothed portion so that the toothing (32) is located entirely within the circumferential surface defined by the cable body (26), and the cable body (26) is an extruded polymer element having a circular or oval cross-section, the reinforcement (30) being arranged eccentrically with respect to a geometrical axis of the cable body and being offset to the side with respect to a longitudinal center plane of the toothing (32).

2. The drive cable according to claim 1, **characterized in that**, with respect to the circumferential direction of the cable body (26), each recess (34) has an opening cross-section that takes up less than 180° in the circumferential direction of the cable body (26).

3. The drive cable according to claim 1 or 2, **characterized in that** each recess (34) has pocket side edges (42) on both sides in the transverse direction of the cable and a guiding section of the cable body (26) extends between the two pocket side edges (42) of a recess (34).

4. The drive cable according to claim 3, **characterized in that** the guiding section has at least three guiding surfaces (84), which are spaced apart from one another in the circumferential direction.

5. The drive cable according to claim 4, **characterized in that** the guiding surfaces (84) have axial center lines that are offset to one another by about 120° in the circumferential direction.

6. The drive cable according to any one of claims 1 to 5, **characterized in that** the cable body (26) has an at least approximately circular cross-section in the area of the tooth tips (36).

7. The drive cable according to any one of claims 1 to 6, **characterized in that** the cable body (26) has an axial recess on its circumference.

8. The drive cable according to claim 7, **characterized in that** the recess is formed by a flattened portion (82) of the cable body (26), by means of which the drive cable can be aligned in the circumferential direction by coming into contact with a corresponding guiding surface of a cable guide.

9. A drive unit for a vehicle element which is mobile relative to a vehicle structure, the drive unit comprising a driving gear wheel (24, 24') and at least one drive cable (20A, 20B) according to any one of claims 1 to 8.

10. The drive unit according to claim 9, **characterized in that** the drive cable (20A, 20B) and the driving gear wheel (24, 24') are engaged with each other across a contact line following a circular line.

11. The drive unit according to claim 10, **characterized in that** the contact line extends across at least 30° with respect to the circumference of the driving gear wheel (24, 24').

12. The drive unit according to claim 11, **characterized in that** the driving gear wheel (24') is engaged with two drive cables (20A, 20B) according to any one of claims 1 to 8 and the two drive cables (20A, 20B) are offset from each other with respect to the axis of the driving gear wheel (24').

13. The drive unit according to claim 12, **characterized in that** each of the two drive cables (20A, 20B) is engaged with the driving gear wheel (24') at a wrap angle of about 180°.

## Revendications

1. Câble d'entraînement pour actionner un élément de véhicule mobile par rapport à une structure de véhicule, le câble d'entraînement comprenant un corps de câble (26) en plastique qui a une denture (32) s'étendant dans la direction axiale pour venir en prise avec une roue dentée (24) d'entraînement et qui est traversé par un renfort (30) continu qui s'étend dans la direction axiale, la denture (32) étant formée par des évidements (34) en forme de poche qui sont espacés régulièrement dans la direction axiale et qui sont limités par des flancs des têtes de dents (36) résultantes dans la direction longitudinale du câble et par des flancs (38) de poche des deux côtés dans la direction transversale du câble et dont chacun est limité au fond par un pied de dent (40) qui est traversé par le renfort (30) continu, **caractérisé en ce que** les têtes de dents (36) de la denture (32) sont en retrait dans la direction de l'axe du corps de câble par rapport à une surface circonférentielle définie par le corps de câble (26) dans la partie sans dents et virtuellement continue dans la partie de dents de manière à ce que la denture (32) soit située entièrement à l'intérieur de la surface circonférentielle définie par le corps de câble (26), et le corps de câble (26) est un élément polymère extrudé qui a une section transversale circulaire ou ovale, le renfort (30) étant disposé excentriquement par rapport à un axe géométrique du corps de câble et étant décalé latéralement par rapport à un plan central longitudinal de la denture (32).

2. Câble d'entraînement selon la revendication 1, **caractérisé en ce que**, par rapport à la direction circonférentielle du corps de câble (26), chaque évidement (34) a une section transversale d'ouverture qui prend moins de 180° dans la direction circonférentielle du corps de câble (26).

3. Câble d'entraînement selon la revendication 1 ou 2, **caractérisé en ce que** chaque évidement (34) a des bords latéraux (42) de poche des deux côtés dans la direction transversale du câble et **en ce qu'**une section de guidage du corps de câble (26) s'étend entre les deux bords latéraux (42) de poche d'un évidement (34).

4. Câble d'entraînement selon la revendication 3, **caractérisé en ce que** la section de guidage a au moins trois surfaces de guidage (84) qui sont espacées les unes des autres dans la direction circonférentielle.

5. Câble d'entraînement selon la revendication 4, **caractérisé en ce que** les surfaces de guidage (84) ont des lignes centrales axiales qui sont décalées les unes par rapport aux autres d'environ 120° dans la direction circonférentielle.

6. Câble d'entraînement selon l'une quelconque des revendications 1 à 5, **caractérisé en ce que** le corps de câble (26) a une section transversale au moins approximativement circulaire dans la zone des têtes de dents (36).

7. Câble d'entraînement selon l'une quelconque des revendications 1 à 6, **caractérisé en ce que** le corps de câble (26) a un évidement axial sur sa circonférence.

8. Câble d'entraînement selon la revendication 7, **caractérisé en ce que** l'évidement est formé par une partie aplatie (82) du corps de câble (26) au moyen de laquelle le câble d'entraînement peut être aligné dans la direction circonférentielle en venant en contact avec une surface de guidage correspondante d'un guide de câble.

9. Unité d'entraînement pour un élément de véhicule mobile par rapport à une structure de véhicule, l'unité d'entraînement comprenant une roue dentée (24, 24') d'entraînement et au moins un câble d'entraînement (20A, 20B) selon l'une quelconque des revendications 1 à 8.

10. Unité d'entraînement selon la revendication 9, **caractérisée en ce que** le câble d'entraînement (20A, 20B) et la roue dentée (24, 24') d'entraînement sont en prise l'un avec l'autre à travers une ligne de contact suivant une ligne circulaire.

11. Unité d'entraînement selon la revendication 10, **caractérisée en ce que** la ligne de contact s'étend sur au moins 30° par rapport à une circonférence de la roue dentée (24, 24') d'entraînement.

12. Unité d'entraînement selon la revendication 11, **caractérisée en ce que** la roue dentée (24') d'entraînement est en prise avec deux câbles d'entraînement (20A, 20B) selon l'une quelconque des revendications 1 à 8 et les deux câbles d'entraînement (20A, 20B) sont décalés l'un par rapport à l'autre par rapport à l'axe de la roue dentée (24') d'entraînement.

13. Unité d'entraînement selon la revendication 12, **caractérisée en ce que** chacun des deux câbles d'entraînement (20A, 20B) est en prise avec la roue dentée (24') d'entraînement à un angle d'enroulement d'environ 180°.
